# EUROPÄISCHE PATENTSCHRIFT

(11) **EP 3 359 845 B1**
(45) Veröffentlichungstag und Bekanntmachung des Hinweises auf die Patenterteilung: **11.09.2019**
(21) Anmeldenummer: 16741942.3
(22) Anmeldetag: 25.07.2016
(51) Int. Cl.: F16G 1/10, F16G 1/28

(54) **KEILRIPPENRIEMEN**
V-RIBBED BELT
COURROIE TRAPÉZOÏDALE À NERVURES

(30) Priorität: 06.10.2015 DE 102015219235
(43) Veröffentlichungstag der Anmeldung: 15.08.2018
(73) Patentinhaber: ContiTech Antriebssysteme GmbH, 30165 Hannover (DE)
(72) Erfinder: KANZOW, Henning, 30900 Wedemark (DE); BONKOWSKI, Manfred, 30900 Wedemark (DE); GREINER, Christian, 30167 Hannover (DE); OBERT, Markus, 30457 Hannover (DE); BROIANIGO, Felicitas, 30161 Hannover (DE)
(74) Vertreter: Kilsch, Armin Ralph
(86) Internationale Anmeldenummer: PCT/EP2016/067606
(87) Internationale Veröffentlichungsnummer: WO 2017/059978

(56) Entgegenhaltungen:
- EP-A1- 1 616 993
- DE-A1- 4 441 156
- JP-A- 2003 240 056

## Beschreibung

Die Erfindung betrifft einen Keilrippenriemen gemäß dem Gegenstand des Anspruchs 1 mit einem Grundkörper aus einem elastomeren Werkstoff, wobei der Keilrippenriemen eine Decklage als Riemenrücken, eine Kraftübertragungszone mit mehreren Zugsträngen als Festigkeitsträger sowie einen Unterbau aufweist, der mit einem Keilrippenprofil versehen ist.

Keilrippenriemen (KRR) als Antriebsriemen finden in Fahrzeugen vor allem Verwendung zum Antrieb von Nebenaggregaten (Nebenaggregatetrieb), wie etwa zum Antrieb einer Kühlwasserpumpe, eines Klimakompressors oder eines Drehstromgenerators. Moderne Automobilmotoren, die mit Riemen-Starter-Generator-Systemen ausgestattet sind, benötigen im Nebenaggregatetrieb einen äußerst robusten Keilrippenriemen (KRR). Die Komponenten eines solchen Systems bestehen aus einem Keilrippenriemen, einem Starter-Generator mit Leistungselektronik sowie einem speziellen Spannsystem, das sowohl für den Startvorgang als auch für den Betrieb der Nebenaggregate für die richtige Riemenvorspannung sorgt. Mit diesen Systemen wird der Motor nicht mehr mit Hilfe eines Ritzelstarters, sondern über den Riementrieb gestartet. Weiterhin kann der Motor über den Riementrieb im Bedarfsfall beschleunigt oder abgebremst werden, wobei bei der letzteren Funktion mindestens ein Teil der Energie im Rekuperationsbetrieb zum Aufladen der Batterie verwendet wird.

Die Richtungsumkehr des Drehmoments am Generator bei Start, Motorbeschleunigung (Boostbetrieb) und Rekuperationsbetrieb führen zu einem Wechsel des Leer- und Zugtrums des Keilrippenriemens, was insbesondere bei der Auslegung der Riemenspanner bzw. des Spannsystems zu berücksichtigen ist, um eine angepaßte Riemenspannkraft sowohl im Startbetrieb als auch im generatorischen Betrieb zu gewährleisten. Eine erhöhte Generatorleistung und ein erhöhtes Massenträgheitsmoment der Elektromaschine führen außerdem zu größeren stationären und dynamischen Belastungen im Riementrieb, zumal der Einsatz eines Generatorfreilaufs aufgrund des Start- und ggf. Boostbetriebs nicht möglich ist. Die Folge sind höhere Zugkraft-, Biegewechsel- und Verschleißbeanspruchungen für den Riemen, größere mechanische Belastungen, erhöhte Dämpfungsanforderungen für das Spannsystem und höhere Lagerkräfte an Spann- bzw. Umlenkrollen sowie weiteren im Antrieb integrierten Nebenaggregaten.

Solchen Belastungen mit hohen Wechselbeanspruchungen ist ein normaler Keilrippenriemen nur schlecht gewachsen. So könnten sich zum Beispiel Risse im Unterbau ausbilden, wodurch die Gefahr entsteht, dass die Zugstränge an den Flanken ausspulen. Auch ist die Dauerfestigkeit der Zugträger unter solchen Belastungen kritisch anzusehen.

Die US 2011/0281676 A1 offenbart für diese Anwendungen einen Keilrippenriemen mit hochmoduligen Zugträgern, d.h. Zugträgern, deren so genannter "Dynamischer Modul", nämlich das Spannungs-Dehnungs -Verhältnis bei dynamisch schwellender oder wechselnder Belastung (,,...under vibratory conditions...") möglichst hoch ist.

Der Einsatz derartiger Riemen ist aber in der Praxis mit Nachteilen verbunden, da diese Riemen in den Nebenaggregatetrieb eingeleitete Belastungs- bzw. Kraftspitzen direkt ohne Dämpfung auf die anderen Aggregate übertragen, wodurch wiederum die Lebensdauer der angetriebenen Aggregate reduziert werden kann. Ein dort genannter Glascord mit einem Gesamttiter des Glases von 1215 tex ist für die meisten Anwendungen im Übrigen auch bereits zu dick. Er verliert durch Biegewechsel an kleinen Riemenscheiben, d.h. etwa bei Scheiben mit einem Durchmesser von weniger als 60 mm, sehr schnell an Festigkeit, was eine Schädigung der Riemen bei hohen Belastungen nach sich ziehen kann.

Verschiedene Kraftübertragungsriemen sind aus dem Stand der Technik bekannt (siehe z.B. die EP1616993 A1; die JP2003240056; und die DE4441156 A1).

Für die Erfindung bestand also die Aufgabe, einen Keilrippenriemen bereitzustellen, der auch bei erhöhter Wechselbeanspruchung eine ausreichende Reißfestigkeit besitzt und hohe Leistungen übertragen kann. Gelöst wird diese Aufgabe durch die Merkmale des Hauptanspruchs. Weitere vorteilhafte Ausbildungen sind in den Unteransprüchen offenbart.

Dabei ist der Keilrippenriemen so ausgebildet, dass er als Festigkeitsträger Glasfasercorde enthält mit einem Titer (Gesamttiter) des Glases zwischen 320 und 1050 tex. In einer solchen Ausbildung ist der als Festigkeitsträger verwendete Cord ausreichend zugfest bei gleichzeitiger hoher Widerstandsfähigkeit gegen eine dynamische Wechselbelastung. Besonders gut gelingt dieser Kompromiss zwischen Festigkeit und Toleranz gegenüber dynamischer Wechselbelastung dann, wenn je nach Anwendungsfall der Keilrippenriemen als Festigkeitsträger Glascorde enthält mit einem Titer des Glases zwischen 450 und 920 tex, vorzugsweise zwischen 530 und 730 tex.

Gemäß der vorliegenden Erfindung bestehen die Glasfasern der Corde aus einem Glas mit 58 bis 70 % Siliziumoxid (SiO2), 7 bis 17 % Magnesiumoxid (MgO), 16 bis 27 % Aluminiumoxid (A1203) und einen Gehalt von weniger als 4 % Dibortrioxid (B203). Ein solches hochfestes Glas wirkt weiter in Richtung auf die oben bereits geschilderten Vorteile, indem nämlich durch die dann mögliche dünnere Cordkonstruktion eine verbesserte Beständigkeit gegen dynamische Wechselbeanspruchung besteht bzw. eine höhere Reißfestigkeit bei einem ähnlichen Titer erreicht werden kann.

Eine weitere vorteilhafte Ausbildung besteht darin, dass der Glasfasercord filamentpräparierte Glasfasern aufweist, wobei die Filamentpräparation chlorsulfoniertes Polyethylen (CSM), Vinyl-Pyridin (VP) und/oder hydrierten Acrylnitrilbutadien-Kautschuk (HNBR) enthält. Die Präparation der Glasfaserfilamente erzeugt einen sicheren Verbund zwischen den Glasfasercorden und der umgebenden Materialmatrix und wirkt so auch im Hinblick auf die Erhöhung der Beständigkeit gegen dynamische Wechselbeanspruchung.

Eine weitere vorteilhafte Ausbildung besteht darin, dass die Glasfasercorde als Gleichschlagcorde ausgebildet sind, d.h., dass Garne/Filamente und auch Corde im gleichen Sinn geschlagen, also z.B. beide Schläge in Z-Richtung. Dadurch wird die Knickbeständigkeit der Corde verbessert.

Eine weitere vorteilhafte Ausbildung besteht darin, dass der Unterbau und/oder die Decklagenmischung aus faserverstärktem EPDM (Ethylen-Propylen-Dien-Kautschuk) oder EPM (Ethylen-Propylen-Kautschuk) bestehen. Durch eine solche Ausbildung ergibt sich eine sehr gute thermische Beständigkeit des Keilrippenriemens. Außerdem ist die Herstellung mit solchen Materialien relativ preiswert zu gestalten.

Eine weitere vorteilhafte Ausbildung besteht darin, dass Unterbau und /oder Decklage Fasern aus Polyethylenterephthalat (PET), Aramid, Polyvinylacetat (PVA) oder Gemischen daraus enthalten. Das Einbringen solcher Fasern in den Unterbau oder in die Decklage verhindert die Rissbildung in diesen Bereichen. Dies ergänzt sich gut mit einer weiteren vorteilhafte Ausbildung, die darin besteht, dass die Fasern im Unterbau im Wesentlichen quer zur Riemenlängsrichtung ausgerichtet sind. Eine solche Ausbildung verbessert zusätzlich die dynamische Beständigkeit des Keilrippenriemens.

Eine weitere vorteilhafte Ausbildung besteht darin, dass das Keilrippenprofil eine Beschichtung aus einem Gewebe, Gewirke oder Gestrick aufweist, welches vorzugsweise zu mehr als 30% aus Polyamid (PA) besteht, insbesondere PA 66 oder PA 6, die zum einen relativ preiswert sind und sich zum anderen durch ein gute Verschleißbeständigkeit auszeichnen. Durch das Aufbringen eines Gewebes, Gewirkes oder Gestrickes wird der Reibbeiwertes so verändert, dass der Riemen bei Kraftspitzen die Möglichkeit behält, in geringem Maße über die Riemenscheibe zu rutschen, ohne dass das Keilrippenprofil dadurch geschädigt wird oder sich zu sehr erwärmt. Durch eine solche Fähigkeit wird das Übertragen von Stößen und Kraftspitzen auf die Aggregate im Trieb verringert, so dass Schläge auf Lager oder Halterungen und damit Schädigungen der Aggregate weitestgehend vermieden werden. Die Lebensdauer des gesamten Systems wird dadurch erhöht.

Üblicherweise besitzt ein solcher im Kraftfahrzeugbereich eingesetzter Keilrippenriemen ein PK-Profil nach DIN 7867.

Mit dem erfindungsgemäßen KRR-Riemen mit einem Glascord 22,5*tex* x3x9 (3 Garne à 22,5 tex als Litze gezwirnt und 9 dieser Litzen zum Kord gezwirnt) und mit faserhaltiger Decklage sowie faserhaltigem Unterbau (ca. 4 Gew.% PET-Fasern in einer EPDM-Mischung) und einem Polyamid-Baumwoll -Elastan-Gestrick (PA/BW) mit 50 Gew.% Polyamid als Rippen-Beschichtung wurden in speziellen Hochleistungsprüfungen ca. 50% mehr Laufzeit im Vergleich zu üblichen P-Aramidcorden in den Konstruktionen 1100*dtex* x1x3 oder 1100*dtex* x1 x4 erzielt.

Die Glasfilamente im Glascord bei dieser Versuchsanordnung hatten die folgende Zusammensetzung: 64,4 Gew.% Siliciumoxid (SiO2), 18,1 Gew.% Aluminiumoxid (Al2O3), 15,0 Gew.% Magnesiumoxid (MgO) und 2,5 Gew.% Boroxid (B2O3).

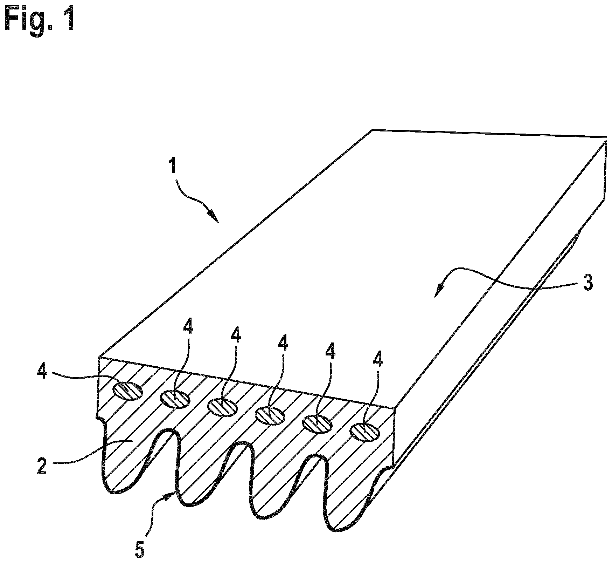

Fig. 1 zeigt zur Verdeutlichung der erfindungsgemäßen Ausbildungen einen Keilrippenriemen 1 als Skizze in einer perspektivisch geschnittenen Ansicht. Deutlich zu erkennen ist hier der Unterbau 2 und die Decklage 3 sowie die Festigkeitsträger 4, die als Glasfasercorde mit einem Titer des Glases 650 tex ausgebildet sind. Das im Unterbau ausgebildete Keilrippenprofil weist eine Beschichtung 5 aus einem Polyamid-Baumwoll - Elastan-Gestrick auf, welches 50 Gew.% Polyamid 66 enthält,. Der Reibbeiwert (Coefficient of friction) dieses Riemens liegt dabei nach SAE J2432 zwischen 1,2 und 1,9.

### Bezugszeichenliste

### (Teil der Beschreibung)

- 1: Keilrippenriemen
- 2: Unterbau
- 3: Decklage
- 4: Festigkeitsträger
- 5: Gewebe-Profilbeschichtung

## Patentansprüche

1. Keilrippenriemen (1) mit einem Grundkörper aus einem elastomeren Werkstoff, wobei der Keilrippenriemen eine Decklage (3) als Riemenrücken, eine Kraftübertragungszone mit mehreren Zugsträngen als Festigkeitsträger (4) sowie einen Unterbau (2) aufweist, der mit einem Keilrippenprofil versehen ist, wobei der Keilrippenriemen als Festigkeitsträger (4) Glasfasercorde enthält, wobei die Glasfasern der Corde aus einem Glas bestehen mit 58 bis 70 % Siliziumoxid (Si02), 7 bis 17 % Magnesiumoxid (MgO), 16 bis 27 % Aluminiumoxid (A1203) und einen Gehalt von weniger als 4 % Dibortrioxid (B203) **dadurch gekennzeichnet, dass** die Glasfasercorde mit einem Titer des Glases zwischen 450 und 920 tex, vorzugsweise zwischen 530 und 730 tex ausgebildet sind.

2. Keilrippenriemen nach Anspruch 1, bei dem der Glasfasercord filamentpräparierte Glasfasern aufweist, wobei die Präparation vorzugsweise chlorsulfoniertes Polyethylen (CSM), Vinyl-Pyridin (VP) und/oder hydrierten Acrylnitrilbutadien-Kautschuk (HNBR) enthält.

3. Keilrippenriemen nach Anspruch 1 oder 2, bei dem die Glasfasercorde als Gleichschlagcorde ausgebildet sind.

4. Keilrippenriemen nach einem der Ansprüche 1 bis 3, bei dem der Unterbau (2) und/oder die Decklage (3) /Decklagennmischung faserverstärktes EPDM (Ethylen-Propylen-Dien-Kautschuk) oder EPM (Ethylen-Propylen-Kautschuk) oder einen Blend aus EPDM und EPM enthält.

5. Keilrippenriemen nach Anspruch 4, bei dem Unterbau (2) und /oder Decklage (3) Fasern aus Polyethylenterephthalat (PET), Aramid, Polyvinylacetat (PVA) oder Gemischen daraus enthalten.

6. Keilrippenriemen nach Anspruch 4 oder 5, bei dem die Fasern im Unterbau (2) im Wesentlichen quer zur Riemenlängsrichtung ausgerichtet sind.

7. Keilrippenriemen nach einem der Ansprüche 1 bis 6, bei dem das Keilrippenprofil eine Beschichtung aus einem Gewebe, Gewirke oder Gestrick aufweist, welches vorzugsweise zu mehr als 30% aus Polyamid (PA) besteht.

## Claims

1. V-ribbed belt (1) having a main body made of an elastomeric material, where the V-ribbed belt has an outer ply (3) as belt backing, a force transmission zone having multiple tensile strands as strength members (4) and a substructure (2) provided with a V-ribbed profile, where the V-ribbed belt contains glass fibre cords as strength members (4), where the glass fibres of the cords consist of a glass having 58% to 70% silicon oxide (SiO₂), 7% to 17% magnesium oxide (MgO), 16% to 27% aluminium oxide (Al₂O₃) and a content of less than 4% diboron trioxide (B₂O₃), **characterized in that** the glass fibre cords are formed with a linear density of the glass between 450 and 920 tex, preferably between 530 and 730 tex.

2. V-ribbed belt according to Claim 1, in which the glass fibre cord comprises filament-prepared glass fibres, where the preparation preferably comprises chlorosulfonated polyethylene (CSM), vinylpyridine (VP) and/or hydrogenated acrylonitrile-butadiene rubber (HNBR).

3. V-ribbed belt according to Claim 1 or 2, in which the glass fibre cords take the form of lang-lay cords.

4. V-ribbed belt according to any of Claims 1 to 3, in which the substructure (2) and/or the outer ply (3)/outer ply mixture comprises fibre-reinforced EPDM (ethylene-propylene-diene rubber) or EPM (ethylene-propylene rubber) or a blend of EPDM and EPM.

5. V-ribbed belt according to Claim 4, in which substructure (2) and/or outer ply (3) comprise fibres of polyethylene terephthalate (PET), aramid, polyvinyl acetate (PVA) or mixtures thereof.

6. V-ribbed belt according to Claim 4 or 5, in which the fibres in the substructure (2) are aligned essentially transverse to the longitudinal belt direction.

7. V-ribbed belt according to any of Claims 1 to 6, in which the V-ribbed profile has a coating of a weave or loop-drawn or loop-formed knit preferably consisting to an extent of more than 30% of polyamide (PA) .

## Revendications

1. Courroie à nervures trapézoïdales (1) avec un corps de base en un matériau élastomère, dans laquelle la courroie à nervures trapézoïdales présente une couche de recouvrement (3) en tant que dos de courroie, une zone de transmission de force avec plusieurs cordons de traction comme éléments de résistance (4) ainsi qu'une structure inférieure (2), qui est dotée d'un profil de nervures trapézoïdales, dans laquelle la courroie à nervures trapézoïdales contient comme éléments de résistance (4) des cordes en fibres de verre, dans laquelle les fibres de verre des cordes sont constituées d'un verre avec 58 à 70 % d'oxyde de silicium (SiO₂), 7 à 17 % d'oxyde de magnésium (MgO), 16 à 27 % d'oxyde d'aluminium (Al₂O₃) et une teneur de moins de 4 % de trioxyde de dibore (B₂O₃), **caractérisée en ce que** les cordes en fibres de verre sont formées avec un titre du verre compris entre 450 et 920 tex, de préférence entre 530 et 730 tex.

2. Courroie à nervures trapézoïdales selon la revendication 1, dans laquelle la corde en fibres de verre présente des fibres de verre préparées en filaments, dans laquelle la préparation contient de préférence du polyéthylène chlorosulfoné (CSM), de la vinyl-pyridine (VP) et/ou du caoutchouc acrylonitrile-butadiène hydrogéné (HNBR).

3. Courroie à nervures trapézoïdales selon la revendication 1 ou 2, dans laquelle les cordes en fibres de verre sont conçues sous forme de cordes à fils parallèles.

4. Courroie à nervures trapézoïdales selon l'une quelconque des revendications 1 à 3, dans laquelle la structure inférieure (2) et/ou la couche de recouvrement (3)/le mélange de la couche de recouvrement contient du EPDM renforcé par des fibres (caoutchouc éthylène-propylène-diène) ou du EPM (caoutchouc éthylène-propylène) ou un mélange de EPDM et EPM.

5. Courroie à nervures trapézoïdales selon la revendication 4, dans laquelle la structure inférieure (2) et/ou la couche de recouvrement (3) contiennent des fibres en téréphtalate de polyéthylène (PET), aramide, acétate de polyvinyle (PVA) ou mélanges de ceux-ci.

6. Courroie à nervures trapézoïdales selon la revendication 4 ou 5, dans laquelle les fibres dans la structure inférieure (2) sont orientées essentiellement transversalement à la direction longitudinale de la courroie.

7. Courroie à nervures trapézoïdales selon l'une quelconque des revendications 1 à 6, dans laquelle le profil des nervures trapézoïdales présente un revêtement en un tissu, un tricot ou un treillis, qui se compose de préférence à raison de plus de 30 % de polyamide (PA).
